# FASCICULE DE BREVET EUROPEEN

(11) **EP 1 000 779 B1**
(45) Date de publication et mention de la délivrance du brevet: **13.02.2008**
(21) Numéro de dépôt: 99122165.6
(22) Date de dépôt: 05.11.1999
(51) Int. Cl.: B60G 3/01, B60G 17/015

(54) **Ensemble comportant une roue et une suspension intégrée à la roue**
Einheit mit einem Rad und einer im Rad integrierten Aufhängung
Assembly consisting of a wheel and an in-wheel integrated suspension

(30) Priorité: 13.11.1998 FR 9814443
(43) Date de publication de la demande: 17.05.2000
(73) Titulaire: Michelin Recherche et Technique S.A., 1763 Granges-Paccot (CH)
(72) Inventeur: Laurent, Daniel, 1723 Marly (CH); Walser, Daniel, 1700 Fribourg (CH)
(74) Mandataire: Bauvir, Jacques

(56) Documents cités:
- EP-A- 0 469 475
- EP-A- 0 878 332
- FR-A- 569 702
- US-A- 2 105 171
- US-A- 2 175 516
- US-A- 2 939 344
- US-A- 3 666 178

## Description

La présente invention concerne la liaison au sol de véhicules. Elle concerne tant le guidage d'une roue de véhicule par rapport au châssis de ce véhicule, que le contrôle du débattement de la roue par rapport au châssis.

On sait qu'une roue est montée sur un moyeu, et que le moyeu est monté sur un porte-roue par l'intermédiaire d'un roulement matérialisant l'axe de rotation de la roue. Le guidage de la roue consiste à permettre un déplacement du porte-roue par rapport au véhicule, d'une ampleur suffisante pour la suspension du véhicule. En même temps, le guidage de la roue doit être tel que le contrôle de la trajectoire du véhicule est assuré avec la plus grande rigueur possible. Le mouvement de débattement que l'on recherche est de grande ampleur dans le sens vertical. On peut souhaiter permettre un faible mouvement dans le sens longitudinal, alors qu'idéalement on cherche à éviter tout mouvement relatif dans le sens transversal. En outre, le braquage et les variations de carrossage que pourraient induire tous ces mouvements doivent être rigoureusement contenus, ce qui apporte aussi une contrainte de conception dont l'homme du métier doit tenir compte.

Si on appelle " plan " de la roue le plan perpendiculaire à l'axe de rotation de la roue, passant par le milieu de la roue, ou plus précisément par le centre de l'aire de contact avec le sol d'un pneu ou d'un bandage élastique monté sur ladite roue (appelé en général " bandage " dans la suite), la maîtrise des mouvements de débattement revient à dire que le guidage doit assurer une position rigoureusement maîtrisée du plan de la roue par rapport au châssis.

Outre l'aspect guidage du plan de la roue, la suspension doit aussi assurer le report de la charge du véhicule sur la roue et le contrôle de l'amplitude des mouvements autorisés par le guidage. C'est le rôle habituellement dévolu aux ressorts et aux amortisseurs, ou aux organes combinant les fonctions ressort (flexibilité) et amortissement (empêcher l'entretien des oscillations).

Toutes les suspensions utilisées à l'heure actuelle sur les véhicules ont pour caractéristique commune d'être plutôt encombrantes. Les bras de suspension doivent avoir une certaine longueur pour que leur mouvement angulaire ne s'accompagne pas par exemple de variations de voie trop importantes (épures de suspension). Même la jambe de force Mac Pherson, dont on sait que l'utilisation croissante vient du plus grand espace qu'elle laisse pour implanter un groupe moto-propulseur en position transversale, apporte son lot d'inconvénients dont son encombrement en hauteur.

Par ailleurs, la recherche d'un compromis toujours meilleur entre le confort de suspension et la tenue de route conduit à proposer des suspensions dites actives ou semi-actives, dont le pilotage est maintenant rendu possible par les progrès de l'électronique. En général, cela conduit à rendre plus encombrante encore l'implantation de la suspension sur le véhicule, en augmentant l'encombrement des ressorts et/ou des amortisseurs, voire en ajoutant des organes supplémentaires formant ressort ou amortisseur.

Une suspension avec un barreau allongé et un organe de guidage est connue de US-A-2175516.

L'objectif de l'invention consiste à proposer un ensemble de liaison au sol complet, facile à intégrer à un véhicule, tout en permettant une suspension dont les caractéristiques d'élasticité et d'amortissement sont bien maîtrisées.

L'invention propose un ensemble de liaison au sol d'un véhicule automobile, ledit ensemble comportant un moyeu conçu pour supporter une roue, ledit ensemble comportant :
- un support comprenant des moyens de montage pour permettre le montage du support sur le châssis d'un véhicule, ledit support étant destiné à être immobilisé en débattement vertical par rapport au châssis,
- un organe de guidage immobile en débattement vertical par rapport au support,
- un barreau allongé et unique, ledit barreau ayant un axe de barreau, ledit barreau étant guidé en translation relative par l'organe de guidage, et coulissant par rapport audit organe de guidage, à l'intérieur de celui-ci, ledit barreau étant monté à rotation relative bloquée par rapport à l'organe de guidage,
- un porte-roue monté sur le barreau aux deux extrémités de celui-ci, ledit porte-roue définissant l'axe de rotation dudit moyeu, le barreau étant disposé par rapport au porte-roue de telle sorte que l'axe dudit barreau est décalé par rapport à l'axe de rotation du moyeu,
- des moyens pour supporter la charge du véhicule transmise par le support au porte-roue, lesdits moyens pour supporter la charge comprenant un ressort agissant entre deux points d'application de l'effort du ressort l'un solidaire du porte-roue et l'autre solidaire de l'organe de guidage,
- des moyens de liaison à un arbre de transmission mécanique, centrés sur l'axe de rotation du moyeu, lesdits moyens de liaison à un arbre de transmission mécanique étant capables d'appliquer un couple au moyeu.

L'invention propose ainsi un ensemble permettant, dans un mode préféré de réalisation, d'intégrer le guidage nécessaire au débattement de la roue, et les éléments permettant d'assurer la flexibilité requise et le contrôle du débattement à l'intérieur de la roue. De la sorte, il est possible que les fonctions essentielles de la suspension (guidage du plan de roue, degré de liberté de débattement dans le sens voulu, et contrôle des mouvements de débattement) soient intégrées à l'intérieur même du volume interne à la roue. Il est ainsi possible d'accrocher très simplement cet ensemble au châssis du véhicule de toute manière convenable, et notamment rigidement. Dans ce dernier cas, l'organe de guidage joue un rôle de support pour la liaison au sol, et est rendu solidaire du châssis, ce qui permet une mise en oeuvre très simple. Le support étant destiné à être immobilisé en débattement vertical par rapport au châssis, et l'organe de guidage étant monté immobile en débattement vertical par rapport au support, l'organe de guidage est donc immobile en débattement vertical par rapport au châssis.

De préférence, pour en diminuer radicalement l'encombrement, l'invention vise à implanter autant d'organes utiles à la suspension que possible dans le volume disponible à l'intérieur de la roue, c'est à dire d'un côté du disque de la roue et radialement à l'intérieur de la roue.

Les moyens électroniques d'asservissement dont on dispose à l'heure actuelle permettent plus rapidement et plus directement de piloter un moteur électrique qu'un organe hydraulique ou pneumatique. C'est pourquoi, dans une variante tout particulièrement avantageuse, l'invention propose d'utiliser un moteur électrique, linéaire ou rotatif, pour contrôler les mouvements de débattement de la roue. Il est ainsi proposé un agencement qui permet de loger un tel moteur dans l'ensemble selon l'invention, tout en restant sensiblement dans les limites de l'espace intérieur de la roue. L'invention présente ainsi l'avantage de se prêter particulièrement bien au pilotage actif des caractéristiques de suspension, et plus précisément au pilotage par voie électrique directe des caractéristiques de suspension.

Notons que, lorsque le guidage en translation du barreau est " sans frottement ", c'est à dire comporte aussi peu de frottements que possible, le contrôle du mouvement de débattement s'en trouve facilité car il n'est pas faussé par des frottements parasites dont l'ampleur est souvent variable. Un guidage par roulement est très approprié. On peut utiliser des galets coopérant avec des chemins de roulement aménagés sur le barreau, les galets étant montés rotatifs sur et par rapport à l'organe de guidage. On pourrait aussi concevoir des surfaces de contact en glissement relatif, dans la mesure où elles comportent un traitement approprié ou bien dans la mesure où elles sont lubrifiées de façon suffisante. Par exemple, on peut utiliser un palier fluide. Cette variante se prête tout particulièrement bien au contrôle du débattement essentiellement au moyen d'une machine électromécanique que l'on peut piloter à cet effet, car l'absence de frottement sec en simplifie le pilotage et améliore les performances globales.

L'invention s'applique aussi bien aux roues directrices qu'aux roues motrices et aux roues à la fois directrices et motrices. Elle permet d'implanter un pivot et d'implanter le point de commande du braquage. Elle permet, dans le cas de roues directrices, de disposer l'axe de pivotement de la roue dans le plan de roue défini ci-dessus et sur un diamètre, c'est à dire de pouvoir adopter la solution dite " du pivot dans l'axe ", c'est à dire une disposition dans laquelle l'axe autour de laquelle la roue braque est perpendiculaire à l'axe de rotation de la roue, l'ensemble étant agencé pour que ledit axe autour duquel la roue braque coupe l'empreinte du bandage au sol sensiblement au centre de celle-ci. Ainsi, dans une variante de construction très avantageuse, l'axe du barreau et l'axe de pivotement du porte-moyeu sont décalés, l'axe de pivotement étant défini par des points de pivotements agencés latéralement par rapport à l'axe du barreau, c'est à dire décalés par rapport à l'axe du barreau, de telle sorte que l'axe de pivotement et l'axe de rotation sont sécants. Cela permet, tout en disposant au centre de suffisamment de place pour faire passer une transmission mécanique, d'adopter une disposition dite " à pivot dans l'axe ".

Le moyeu comporte, centrés sur l'axe de rotation de la roue, des moyens de liaison à un arbre de transmission mécanique capable d'appliquer un couple au moyeu en agissant en prise directe sur le centre de la roue. En raison des débattements de la roue concernée par rapport au châssis du véhicule auquel l'ensemble est accroché, il convient d'implanter un joint de transmission, de préférence homocinétique, au point d'intersection entre l'axe de pivot et l'axe de rotation de la roue.

Comme élément formant ressort, on utilise un ressort spiral. La spire intérieure de celui-ci est solidaire de l'organe de guidage (ce qui donne la référence liée au châssis) et la spire extérieure dudit ressort spiral est solidaire d'une sangle reliée au porte-roue (qui suit exactement les débattements de la roue).

L'invention sera mieux comprise par la description qui va suivre, d'un exemple donné à titre non limitatif, en se référant au dessin annexé sur lequel:
la figure 1 est une vue partielle selon I-I à la figure 2, avec quelques coupes partielles;
la figure 2 est une vue partielle et coupe partielle selon II-II à la figure 1;

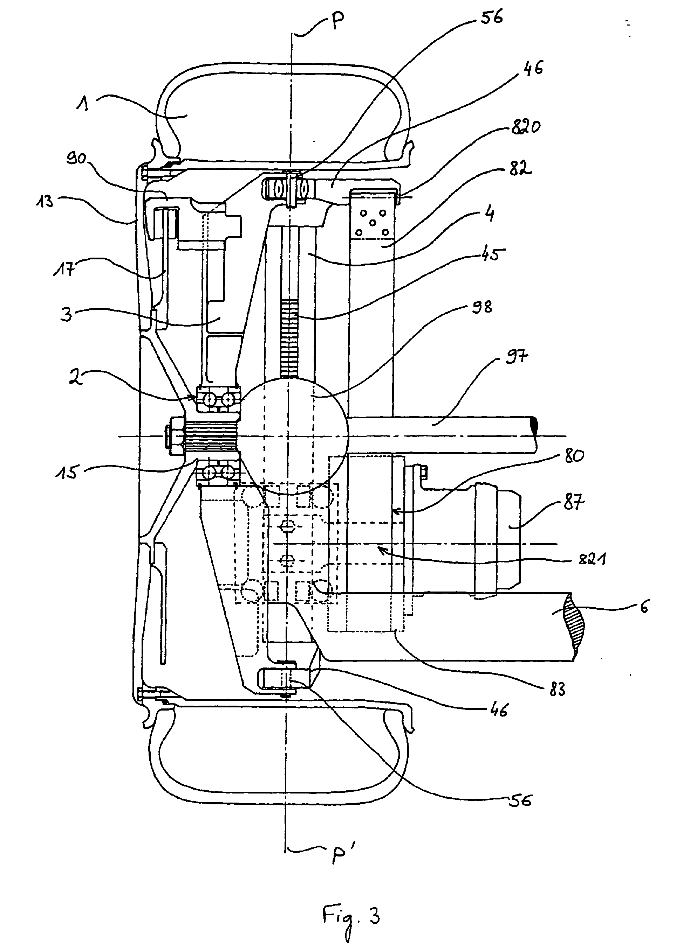

la figure 3 est une coupe selon III-III à la figure 1.

Aux différentes figures, on reconnaît un pneu 1 monté sur une jante 10, celle-ci étant réalisée en deux parties 11 et 12, séparables axialement, suivant l'une des techniques possibles permettant de monter un pneu 1 sur une jante. On pourrait bien entendu adopter d'autres solutions, comme un pneu accroché définitivement à sa jante, ou bien un bandage élastique non gonflé ou non pneumatique, l'invention n'ayant pas pour objet les moyens assurant le contact avec la route en eux-mêmes.

La jante 10 est reliée à un disque 13 de roue. La jante 10 et le disque 13 forment une roue 14. Cette roue 14 est montée sur un moyeu 15 grâce à des goujons (non représentés). Un disque de frein 17 est solidaire du moyeu 15. Les détails de réalisation du montage d'une roue et d'un disque de frein sur un moyeu sont bien connus de l'homme du métier et ne nécessitent pas de plus ample explication. Le sous-ensemble qui vient d'être décrit constitue les pièces tournantes de l'ensemble selon l'invention. Leur axe de rotation est l'axe XX'. Ces pièces tournantes sont montées sur un porte-roue 3 par l'intermédiaire d'un roulement 2.

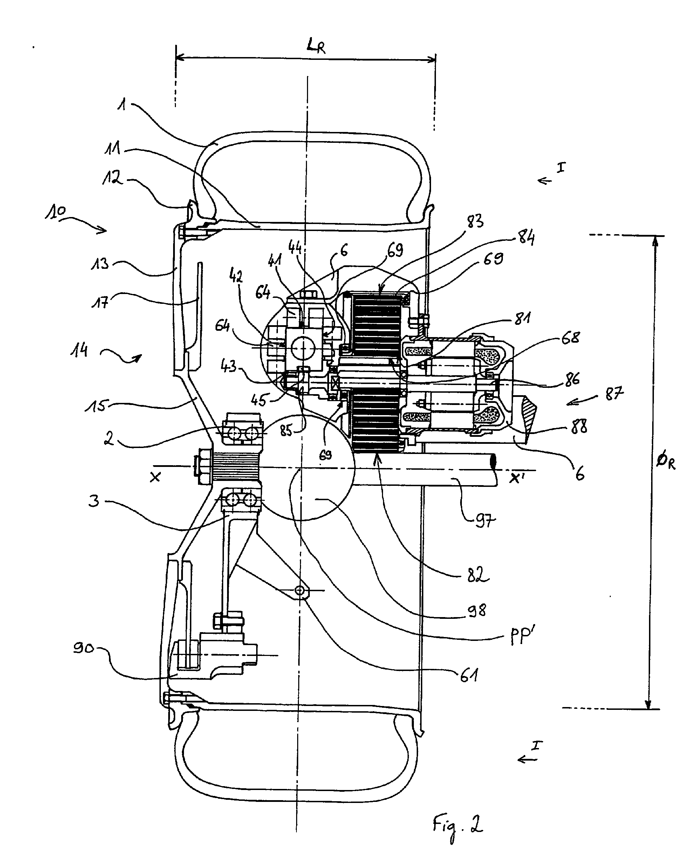

Le porte-roue 3 est lui-même rendu solidaire d'un barreau 4 par des pattes 46. Le barreau 4 illustrant l'invention a un axe longitudinal CC'. En outre, il est ici choisi de section carrée. Ce type de section, parmi d'autres possibles, va permettre de bloquer la rotation du barreau 4 autour de son axe CC'. Le barreau 4 comporte ainsi quatre chemins de roulement 41, 42, 43, 44 (figure 2). Le porte-roue 3 et le barreau 4 sont agencés et montés l'un par rapport à l'autre de sorte que l'axe CC' du barreau 4 est perpendiculaire, mais non sécant à l'axe XX' de rotation de la roue 14. Le barreau 4 et le porte-roue 3 font partie de ce que l'on appelle usuellement les organes non-suspendus, et sont non-tournants.

Le barreau 4 est en appui sur un ensemble de galets 64, coopérant avec les chemins de roulement 41, 42, 43, 44. Ces galets sont montés rotatifs sur un organe de guidage 6, afin d'autoriser la translation du barreau 4 le long de son axe CC'. Notons que l'organe de guidage 6 entoure le barreau 4, et que le porte-roue 3 est monté sur le barreau aux deux extrémités de celui-ci. Le barreau, le porte-roue 3 et l'organe de guidage 6 sont logés dans une enveloppe délimitée radialement par un diamètre de référence φ_{R}, et axialement d'un côté par le disque de roue. Plus particulièrement, le barreau, le porte-roue 3 et l'organe de guidage 6 sont logés dans une enveloppe délimitée axialement d'un côté par le disque de roue et, à partir d'une limite fixée par le disque de ladite roue, par une largeur correspondant sensiblement à une largeur de référence L_{R} correspondant à l'encombrement en largeur de la roue et son bandage, quels que soient les modes de réalisation de ceux-ci.

Le barreau 4 et l'organe de guidage 6 forment une coulisse. Notons que le barreau 4 ne peut tourner autour de l'axe CC' indépendamment de l'organe de guidage 6. Le porte roue 3 est monté pivotant par rapport au barreau 4 par l'intermédiaire de pivots 56 disposés aux extrémités des pattes 46. Il y a donc un degré de liberté de pivotement du porte-roue 3 par rapport à l'organe de guidage 6. Bien que l'axe longitudinal du barreau soit décalé par rapport au centre de la roue, l'axe de pivotement (autour duquel la roue braque) est centré dans la roue.

Ainsi, il existe un et un seul degré de liberté entre l'organe de guidage 6 et le porte-roue 3 : une translation relative, le long de l'axe CC'. Cette translation est suffisante aussi bien vers le haut que vers le bas. Elle permet donc une course de suspension suffisante aussi bien à la détente qu'à la compression.

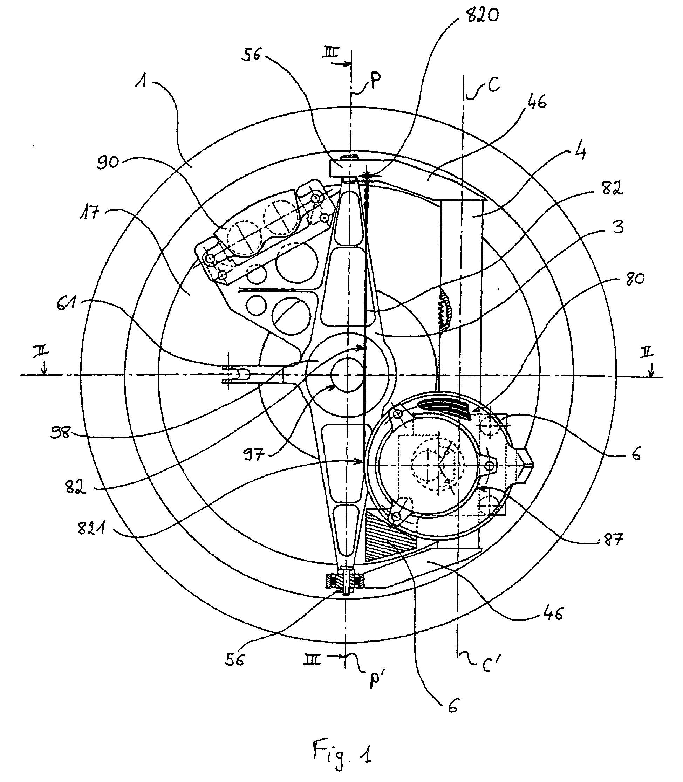

Notons encore qu'un bras de levier 61 (figure 1) est solidaire du porte-roue 3. Ce levier 61 peut être relié à une biellette de commande de direction (non représentée), conçue et/ou implantée de préférence de façon à empêcher ou à limiter à une valeur acceptable les braquages induits par le débattement de la roue. Dans le cas d'une roue non directrice, on peut monter rigidement le barreau 4 sur les pattes 46, ou bloquer le degré de liberté de rotation autour de l'axe CC' par un montage adéquat d'une barre d'accouplement au sur le levier 61

On a vu que le mouvement de suspension proposée par la présente invention est assuré par la translation relative possible entre le barreau 4 et l'organe de guidage 6. On a aussi vu comment le braquage de la roue 14 est rendu possible. On a dit que l'organe de guidage 6 peut être monté sur le châssis d'un véhicule rigidement, ce qui n'exclut pas l'utilisation de pièces anti vibratoires en caoutchouc.

On va décrire dans la suite comment on peut intégrer à l'ensemble de liaison au sol proposé par l'invention les moyens de contrôler les mouvements de rotation et de débattement de la roue.

Commençons par le mouvement de suspension (débattement de la roue). Suivant une caractéristique particulière de réalisation, le ressort assurant la reprise de la charge agit entre deux points d'appui décalés par rapport à l'axe du barreau, de sorte que l'effort résultant que ledit ressort développe pour supporter la charge du véhicule est orienté parallèlement à l'axe du barreau et agit en un point décalé par rapport à l'axe du barreau. Dans l'exemple illustrant l'invention, la matérialisation des moyens de contrôle du débattement du barreau par rapport à l'organe de guidage est réalisée comme indiqué ci-après. Un ressort spiral 80 agit entre la roue et le châssis pour supporter la charge du véhicule.

Dans l'exemple illustrant l'invention, le ressort spiral est obtenu par découpe selon une ligne de coupe en spirale, dans une rondelle d'acier massive, ayant la largeur voulue pour le ressort spiral, ayant une surface cylindrique radialement extérieure et une surface cylindrique radialement intérieure. La découpe en spirale ne rejoint ni la surface cylindrique intérieure ni la surface cylindrique extérieure. On obtient ainsi d'une seule pièce le ressort spiral lui-même, et deux manchons cylindriques, l'un intérieur et l'autre extérieure, pour connecter le ressort spiral aux éléments entre lesquels il doit agir.

Le manchon intérieur prolongeant la spire intérieure 81 du ressort spiral 80 est monté sur un fourreau 68 qui prolonge l'organe de guidage 6. La spire intérieure est ainsi solidaire de l'organe de guidage 6, ce qui la rend solidaire du châssis du véhicule quant au contrôle du mouvement de débattement de la suspension. Le manchon extérieur qui prolonge la spire extérieure 84 du ressort spiral 80 est solidaire d'une enveloppe cylindrique 83 rotative, centrée par rapport au fourreau 68 grâce aux roulements 69. L'axe des roulements 69 est perpendiculaire à l'axe du barreau. Une sangle 82 est attachée sur ladite enveloppe cylindrique 83. Elle est ainsi fonctionnellement reliée à la spire extérieure 84 à laquelle elle imprime une rotation pure, c'est à dire sans pouvoir décentrer la spire extérieure 84 par rapport à la spire intérieure 81. Par ailleurs, la sangle 82 est attachée à l'une des pattes 46, donc au barreau 4. La sangle 82 se trouve ainsi solidaire du porte-roue 3 quant au contrôle du mouvement de débattement de la suspension. La sangle 82 est enroulée autour de l'enveloppe cylindrique contenant le ressort spiral 80. Ainsi, la sangle 82 reporte les mouvements verticaux de la roue à la spire extérieure 84 du ressort spiral 80, tout en transformant le mouvement linéaire de débattement de la roue en mouvement rotatif pour appliquer un moment au ressort spiral 80.

Les points d'appui de l'effort du ressort 80, dont on a dit qu'ils sont déportés par rapport à l'axe du barreau 4, sont d'une part le point 820 de montage de la sangle 82 sur la patte 46 supérieure, et le point 821 de tangence de la sangle 82 sur l'enveloppe rotative 83.

En ce qui concerne le ressort, on voit aussi que cet organe est logé dans une enveloppe limite délimitée radialement par le diamètre de référence φ_{R}, et axialement d'un côté par le disque de roue. Plus particulièrement, le ressort est logé à l'intérieur d'une enveloppe déterminée, d'un côté par une limite fixée par le disque de ladite roue et de l'autre côté par un plan virtuel tangent à la roue, selon les mêmes remarques que celles faites ci-dessus.

Voyons maintenant comment on peut empêcher l'entretien d'oscillations du ressort 80. Le barreau 4 comporte une crémaillère 45. Un pignon 85 est en prise sur ladite crémaillère. Le pignon 85 transmet son mouvement de rotation au rotor 86 d'une machine électromécanique 87 dont le stator 88 est solidaire de l'organe de guidage 6. L'arbre du rotor 86 de la machine électromécanique rotative 87 passe à l'intérieur de la spire intérieure dudit ressort spiral, comme on le voit bien à la figure 2. La machine électromécanique 87 et le ressort spiral 80 sont disposés côte à côte, rendant ainsi l'implantation de toutes ces fonctions de suspension très compacte.

Le mouvement linéaire du barreau 4 est ainsi transformé en mouvement rotatif, sur lequel on agit par l'intermédiaire de la machine électromécanique 87 pour apporter la fonction amortissement nécessaire, ou toute autre fonction plus élaborée visant à procurer à la suspension un caractère actif au moyen d'une commande adéquate de ladite machine électromécanique 87. La conception d'une telle fonction élaborée ne fait pas partie en soi de la présente invention, dont l'objectif est de procurer les moyens mécaniques et électromécaniques rendant la chose possible. Ajoutons simplement, pour être complet, qu'une façon simple d'assurer un amortissement est de connecter la machine électromécanique à une charge résistive, et de freiner le mouvement de rotation de son rotor suivant le même principe que les ralentisseurs électriques bien connus équipant certains véhicules routiers comme des cars de transport de passagers.

Après les fonctions ressort et amortisseur ou les fonctions équivalentes, examinons l'implantation des moyens de freinage. Rappelons qu'un disque de frein 17 est solidaire du moyeu 15. L'effort de freinage est appliqué sur le disque de frein 17 par un étrier de frein 90 solidaire du porte-roue 3. L'étrier de frein 90 est déporté par rapport à l'axe CC' du barreau 4, ce qui permet de le loger dans le volume disponible à l'intérieur de la roue 14. L'étrier de frein 90 permet à la demande de pincer le disque de frein 17 par une commande appropriée, par exemple hydraulique ou électrique, ladite commande ne faisant pas partie en soi de la présente invention. Bien entendu, ce type de frein, à disque, n'est qu'une variante constructive et, plus généralement, l'invention peut utiliser des moyens de freinage comportant une pièce de révolution pourvue d'au moins une piste de freinage, ladite pièce de révolution appartenant audit ensemble et étant solidaire du moyeu, ledit ensemble comportant un organe de freinage pour appliquer un matériau de friction sur ladite piste, ledit organe de freinage étant solidaire du porte-roue, ledit organe de freinage et ledit ressort étant montés par rapport au barreau de part et d'autre de celle-ci.

L'invention est illustrée dans son application à une roue motrice. Un arbre de transmission 97 transmet un couple au moyeu 15, via un joint homocinétique 98 disposé dans l'axe du pivot. Notons que l'enveloppe cylindrique 83 comprenant le ressort 80 et la machine électromécanique 87 ne suivent ni les mouvements de braquage de la roue, ni les mouvements de débattement de la suspension. Quant à l'arbre de transmission 97, il est immobile dans l'espace lors d'un braquage parce que le joint homocinétique 98 est exactement centré sur l'axe de pivot, mais balaye l'espace pendant le débattement de la suspension. Grâce à l'agencement proposé pour le ressort, le volume occupé par le ressort spiral 80 et la machine électromécanique 87 est tout particulièrement compact, et ne gêne pas le passage de la transmission.

L'invention s'étend aussi au cas où l'ensemble comporte une roue dentée solidaire du moyeu, ladite roue dentée étant en prise avec un pignon monté tournant sur le porte-roue, le mouvement dudit pignon étant commandé par un moteur de traction dont le stator est solidaire du porte-roue, dont le rotor entraîne en prise directe ledit pignon, de façon à pouvoir appliquer un couple audit moyeu via la roue dentée. En effet, il est aussi possible d'ajouter une roue dentée concentrique au moyeu 15, juste à côté du disque de frein 17, ce qui permet facilement d'ajouter un ou plusieurs moteurs électriques qui agissent ainsi en parallèle de la transmission mécanique par l'arbre 97. Cette disposition peut être utile pour un véhicule hybride parallèle.

## Revendications

1. Ensemble de liaison au sol d'un véhicule automobile, ledit ensemble comportant un moyeu (15) conçu pour supporter une roue, ledit ensemble comportant :
• un support comprenant des moyens de montage pour permettre le montage du support sur le châssis d'un véhicule, ledit support étant destiné à être immobilisé en débattement vertical par rapport au châssis,
• un organe de guidage (6) immobile en débattement vertical par rapport au support,
• un barreau (4) allongé et unique, ledit barreau ayant un axe de barreau, ledit barreau étant guidé en translation relative par l'organe de guidage, et coulissant par rapport audit organe de guidage, à l'intérieur de celui-ci, ledit barreau étant monté à rotation relative bloquée par rapport à l'organe de guidage
• un porte-roue (3) monté sur le barreau aux deux extrémités de celui-ci, ledit porte-roue (3) définissant l'axe de rotation dudit moyeu, le barreau étant disposé par rapport au porte-roue de telle sorte que l'axe dudit barreau est décalé par rapport à l'axe de rotation du moyeu,
• des moyens pour supporter la charge du véhicule transmise par le support au porte-roue, lesdits moyens pour supporter la charge comprenant un ressort (80) agissant entre deux points d'application de l'effort du ressort l'un solidaire du porte-roue et l'autre solidaire de l'organe de guidage,
• des moyens de liaison à un arbre de transmission mécanique (97), centrés sur l'axe de rotation du moyeu, lesdits moyens de liaison à un arbre de transmission mécanique étant capables d'appliquer un couple au moyeu.

2. Ensemble selon la revendication 1, dans lequel le ressort est un ressort spiral (80).

3. Ensemble selon la revendication 1 ou 2, comportant un axe de pivotement, dans lequel l'axe du barreau (4) et l'axe de pivotement du porte-moyeu (15) sont décalés, l'axe de pivotement étant défini par des points de pivotements décalés par rapport à l'axe du barreau de telle sorte que l'axe de pivotement et l'axe de rotation sont sécants.

4. Ensemble selon la revendication 2 ou 3, dans lequel la spire intérieure (81) du ressort spiral (80) est solidaire de l'organe de guidage (6) et dans lequel la spire extérieure (84) du ressort spiral (80) est solidaire d'une enveloppe cylindrique (83) rotative, contenant ledit ressort spiral (80), à laquelle est attachée et autour de laquelle s'enroule une sangle (82).

5. Ensemble selon l'une des revendications 1 à 4, dans lequel le ressort agit entre deux points d'appui décalés par rapport à l'axe du barreau, de sorte que l'effort résultant que ledit ressort développe pour supporter la charge du véhicule est orienté parallèlement à l'axe du barreau et agit en un point décalé par rapport à l'axe du barreau.

6. Ensemble selon l'une des revendications 1 à 5, dans lequel le guidage en translation du barreau par l'organe de guidage est un guidage essentiellement sans frottement, ledit ensemble comprenant des moyens de contrôle du débattement comportant essentiellement une crémaillère (45) aménagée sur le barreau (4), en prise avec un pignon (85) monté tournant sur l'organe de guidage, la rotation dudit pignon étant contrôlée par une machine électromécanique rotative (87), susceptible d'être pilotée à cet effet.

7. Ensemble selon la revendication 5 et 6, dans lequel l'arbre de la machine électromécanique rotative passe à l'intérieur de la spire intérieure (81) dudit ressort spiral, ladite machine (87) et le ressort spiral (80) étant disposés côte à côte.

8. Ensemble selon la revendication 1, dans lequel des galets (64) coopèrent avec des chemins de roulement (41, 42, 43, 44) aménagés sur le barreau (4), lesdits galets étant montés rotatifs sur l'organe de guidage (6), afin de guider sans frottement par un roulement la translation du barreau (4).

9. Ensemble selon la revendication 1, dans lequel le porte-roue (3), le barreau (4), et l'organe de guidage (6) sont logés dans une enveloppe limite radialement par ledit bandage et délimitée axialement d'un côté par une limite fixée par le disque de ladite roue.

10. Ensemble selon la revendication 9, dans lequel le ressort (80) est logé dans ladite enveloppe limite et est logé axialement à l'intérieur d'un plan virtuel tangent à l'extrémité de la roue.

11. Ensemble selon l'une des revendications 1 à 10, dans lequel ledit moyeu est conçu pour supporter des moyens de freinage, les moyens de freinage comportant une pièce de révolution pourvue d'au moins une piste de freinage, ladite pièce de révolution appartenant audit ensemble et étant solidaire du moyeu, ledit ensemble comportant un organe de freinage pour appliquer un matériau de friction sur ladite piste, ledit organe de freinage étant solidaire du porte-roue.

## Claims

1. Suspension assembly of a motor vehicle, said assembly comprising a hub (15) designed to support a wheel, said assembly comprising:
a support comprising mounting means for making possible mounting of the support on the chassis of a vehicle, said support being intended to be locked on vertical deflection relative to the chassis,
· a guide member (6) locked on vertical deflection relative to the support,
· a single elongated bar (4), said bar having an axis, said bar being guided in relative translation by the guide member and sliding inside said guide member, said bar being mounted in relative rotation locked in relation to the guide member,
a wheel carrier (3) mounted on the bar at both ends of the latter, said wheel carrier (3) defining the axis of rotation of said hub, said bar being arranged with respect to said wheel carrier so that the bar axis is offset with respect to said axis of rotation of said hub,
means for supporting the weight of the vehicle transmitted by the support to the wheel carrier, said means for supporting the weight comprising a spring (80) acting between two points of application of the stress of the spring, one integral with the wheel carrier and the other integral with the guide member
means of linkage to a mechanical transmission shaft (97), centered on the axis of rotation of the hub, said means of linkage to a mechanical transmission shaft being capable of applying a torque to the hub.

2. Assembly according to Claim 1, in which the spring is a spiral spring (80).

3. Assembly according to Claim 1 or 2, comprising an axis of pivoting, in which the axis of the bar (4) and the axis of pivoting of the hub carrier (15) are offset, the axis of pivoting being defined by pivoting points arranged laterally relative to the axis of the bar, so that the axis of pivoting and the axis of rotation are secant.

4. Assembly according to Claim 2 or 3, in which the inner turn (81) of the spiral spring (80) is integral with the guide member (6) and in which the outer turn (84) of the spiral spring (80) is integral with a rotating cylindrical casing (83), containing said spiral spring (80), to which a belt (82) is attached and around which it is wound.

5. Assembly according to one of Claim 1 to 4, in which said spring acts between two points of application offset with respect to the bar axis, whereby the resulting stress which the spring develops to support the load of the vehicle is oriented parallel to the bar axis and acts on a point offset with respect to the bar axis.

6. Assembly according to one of Claims 1 to 5, in which the guidance on translation of the bar by the guide member is essentially friction-free guidance, said assembly comprising means of control of deflection consisting essentially of a rack (45) arranged on the bar (4), engaged with a pinion (85) mounted turning on the guide member, the rotation of said pinion being controlled by a rotating electromechanical machine (87) capable of being operated for that purpose.

7. Assembly according to Claims 5 and 6, in which the shaft of the rotating electromechanical machine passes into the inner turn (81) of said spiral spring, said machine (87) and the spiral spring (80) being placed side by side.

8. Assembly according to Claim 1, in which rollers (64) cooperate with roller ways (41, 42, 43, 44) arranged on the bar (4), said roller being mounted rotating on the guide member (6), in order to guide translation of the bar without bearing friction.

9. Assembly according to Claim 1, in which the wheel carrier (3), the bar (4) and the guide member (6) are housed in a casing limited radially by said tire and delimited axially on one side by a boundary fixed by the disk of said wheel.

10. Assembly according to Claim 9, in which the spring (80) is housed in said boundary casing and is axially housed inside a virtual plane tangent to the end of the wheel.

11. Assembly according to one of Claims 1 to 10, in which said hub is designed to support braking means, the braking means comprising a revolving part provided with at least one braking track, said revolving part belonging to said assembly and being integral with the hub, said assembly comprising a braking element for applying a friction material on said track, and said braking element being integral with the wheel carrier.

## Patentansprüche

1. Bodengruppeneinheit eines Kraftfahrzeugs, wobei die Einheit eine Nabe (15) aufweist, die konzipiert ist, um ein Rad zu tragen, wobei die Einheit aufweist:
· einen Träger, der Montagemittel aufweist, um die Montage des Trägers auf das Fahrgestell eines Fahrzeugs zu erlauben, wobei der Träger dazu bestimmt ist, in Höhenverstellung bezüglich des Fahrgestells blockiert zu werden,
• ein Führungsorgan (6), das in Höhenverstellung bezüglich des Trägers unbeweglich ist,
• einen länglichen und einzigen Stab (4), der eine Stabachse hat, wobei der Stab in relativer Translationsbewegung vom Führungsorgan geführt wird und bezüglich des Führungsorgans in dessen Innerem gleitet, wobei der Stab in relativer Drehung bezüglich des Führungsorgans blockiert montiert ist,
• einen Radhalter (3), der auf den Stab an dessen beiden Enden montiert ist, wobei der Radhalter (3) die Drehachse der Nabe definiert, wobei der Stab bezüglich des Radhalters so angeordnet ist, dass die Achse des Stabs bezüglich der Drehachse der Nabe versetzt ist,
• Mittel, um die Last des Fahrzeugs zu tragen, die vom Träger auf den Radhalter übertragen wird, wobei die Mittel zum Tragen der Last eine Feder (80) aufweisen, die zwischen zwei Anwendungspunkten der Kraft der Feder wirkt, von denen einer fest mit dem Radhalter und der andere fest mit dem Führungsorgan verbunden ist,
• Verbindungsmittel mit einer mechanischen Antriebswelle (97), die auf die Drehachse der Nabe zentriert sind, wobei die Verbindungsmittel mit einer mechanischen Antriebswelle in der Lage sind, ein Drehmoment auf die Nabe anzuwenden.

2. Einheit nach Anspruch 1, bei der die Feder eine Bandfeder (80) ist.

3. Einheit nach Anspruch 1 oder 2, die eine Schwenkachse aufweist, bei der die Achse des Stabs (4) und die Schwenkachse des Nabenträgers (15) versetzt sind, wobei die Schwenkachse von Schwenkpunkten definiert wird, die bezüglich der Achse des Stabs derart versetzt sind, dass die Schwenkachse und die Drehachse sich schneiden.

4. Einheit nach Anspruch 2 oder 3, bei der die innere Windung (81) der Bandfeder (80) fest mit dem Führungsorgan (6) verbunden ist, und bei der die äußere Windung (84) der Bandfeder (80) fest mit einer drehenden zylindrischen Hülle (83) verbunden ist, die die Bandfeder (80) enthält, an der ein Gurt (82) befestigt ist und sich um sie aufwickelt.

5. Einheit nach einem der Ansprüche 1 bis 4, bei der die Feder zwischen zwei Auflagepunkten wirkt, die bezüglich der Achse des Stabs versetzt sind, so dass die resultierende Kraft, die die Feder entwickelt, um die Last des Fahrzeugs zu tragen, parallel zur Achse des Stabs ausgerichtet ist und an einem bezüglich der Achse des Stabs versetzten Punkt wirkt.

6. Einheit nach einem der Ansprüche 1 bis 5, bei der die Translationsführung des Stabs durch das Führungsorgan eine Führung im Wesentlichen ohne Reibung ist, wobei die Einheit Mittel zur Überwachung des Federwegs aufweist, die hauptsächlich eine auf dem Stab (4) angeordnete Zahnstange (45) aufweisen, die mit einem Ritzel (85) in Eingriff steht, das drehend auf das Führungsorgan montiert ist, wobei die Drehung des Ritzels von einer drehenden elektromechanischen Maschine (87) überwacht wird, die zu diesem Zweck gesteuert werden kann.

7. Einheit nach Anspruch 5 und 6, bei der die Welle der drehenden elektromechanischen Maschine durch das Innere der inneren Windung (81) der Bandfeder geht, wobei die Maschine (87) und die Bandfeder (80) nebeneinander angeordnet sind.

8. Einheit nach Anspruch 1, bei der Rollen (64) mit Rollbahnen (41, 42, 43, 44) zusammenwirken, die auf dem Stab (4) ausgebildet sind, wobei die Rollen drehend auf das Führungsorgan (6) montiert sind, um die Translationsbewegung des Stabs (4) ohne Reibung durch ein Lager zu führen.

9. Einheit nach Anspruch 1, bei der der Radhalter (3), der Stab (4) und das Führungsorgan (6) in einer Grenzhülle angeordnet sind, die radial vom Reifen und axial auf einer Seite von einer Grenze begrenzt wird, die von der Radscheibe festgelegt wird.

10. Einheit nach Anspruch 9, bei der die Feder (80) in der Grenzhülle angeordnet ist und axial innerhalb einer virtuellen Ebene liegt, die das Ende des Rads tangiert.

11. Einheit nach einem der Ansprüche 1 bis 10, bei der die Nabe konzipiert ist, um Bremsmittel zu tragen, wobei die Bremsmittel ein Drehbauteil aufweisen, das mit mindestens eine Bremsspur versehen ist, wobei das Drehbauteil zur Einheit gehört und fest mit der Nabe verbunden ist, wobei die Einheit ein Bremsorgan aufweist, um einen Reibungswerkstoff auf die Spur aufzubringen, wobei das Bremsorgan fest mit dem Radhalter verbunden ist.
